# EUROPEAN PATENT APPLICATION

(11) **EP 1 236 784 A1**
(43) Date of publication of application: **04.09.2002**
(21) Application number: 00978058.6
(22) Date of filing: 01.12.2000
(51) Int. Cl.: C09K 11/08, C01F 17/00, C01G 9/08

(54) **METHOD FOR PRODUCING PHOSPHOR**

(30) Priority: 01.12.1999 JP 34185399; 01.12.1999 JP 34185499; 01.12.1999 JP 34185599; 01.12.1999 JP 34185699; 01.12.1999 JP 34185799
(71) Applicant: Kasei Optonix, Ltd., Odawara-shi, Kanagawa-ken 250-2862 (JP)
(72) Inventor: KIJIMA, Naoto, Mitsubishi Chemical Corporation, Yokohama-shi, Kanagawa 227-8502 (JP); MIWA, Taiichiro, Kasei Optonix, Ltd., Odawara-shi, Kanagawa 250-0862 (JP)
(74) Representative: ter Meer, Nicolaus, Dipl.-Chem., Dr.
(86) International application number: JP0008526
(87) International publication number: WO01040402

(57) **Abstract**

It is to easily produce a phosphor having a small number of aggregated particles, having a spherical shape, a high purity and a uniform chemical composition, and having excellent emission properties.

A phosphor raw material solution containing metal elements constituting the phosphor is sprayed into a gas atmosphere to form fine droplets preferably by using a nozzle having a specific structure, said droplets are preferably classified to adjust the particle size so that the weight average particle size of the droplets is within a range of from 0.5 to 20 µm and 90 wt% of the droplets have a particle size of at most double the weight average particle size, and at the same time, the volume concentration of the droplets in the gas is concentrated at least double, followed by drying to obtain solid particles, the surface of said solid particles is preferably covered with a modifying substance, and the above solid particles are introduced into a pyrolysis synthesis furnace together with the above gas accompanying the particles and heated, and subjected to pyrolysis synthesis, and preferably re-heated at a temperature lower than the pyrolysis temperature by at least 100°C.

## Description

### TECHNICAL FIELD

The present invention relates to a process for producing a phosphor comprising e.g. an oxide, a sulfide or an oxysulfide as the main phase, to be used for e.g. a cathode ray tube, a fluorescent lamp or a plasma display panel (PDP).

### BACKGROUND ART

A phosphor to be used for e.g. a cathode ray tube, a fluorescent lamp or PDP has conventionally been produced in such a manner that raw material powders are mixed and then put in a baking container such as a crucible and heated at a high temperature for a long period of time to form a phosphor by a solid state reaction, followed by pulverization by e.g. a ball mill.

However, the phosphor produced by this process comprises a powder of aggregated primary particles having irregular shapes. If this phosphor is coated to form a fluorescent layer, the obtained fluorescent layer for e.g. a cathode ray tube, a fluorescent lamp or PDP tends to be inhomogeneous and have a low filling density, and thereby has a low emission properties. Further, a phosphor having a desired particle size is obtained by pulverization by e.g. a ball mill after the solid state reaction, and physical and chemical impact is applied at that time. As a result, defects are likely to occur in the inside of the particles or on the surface, whereby the emission intensity tends to decrease, such being disadvantageous. Further, since heating at a high temperature is conducted for a long period of time in a baking container such as a crucible, decrease in emission properties due to inclusion of impurities from the crucible is inevitable. Further, the solid state reaction may not proceed adequately depending upon the particle size of the raw material powder, and an impurity phase coexists to decrease emission properties in some cases. Further, since heating is carried out at a high temperature for a long period of time, the energy consumed tends to be large, thus increasing the production cost of the phosphor.

Further, a process has been proposed to produce a phosphor by forming a solution containing metal elements constituting a phosphor into fine droplets by e.g. an ultrasonic atomizer, followed by heating in a pyrolysis reaction furnace (JP-A-2000-87033). However, in order to produce a large amount of fine droplets by using an ultrasonic atomizer, it is required to operate a few hundreds to a few thousands of ultrasonic generating elements simultaneously, and it is required to introduce a large quantity of energy. Further, depending upon subtle difference in shape among the ultrasonic generating elements, the particle size distribution of the obtained droplets tends to be broad, and the particle size distribution of the phosphor to be obtained after drying and pyrolysis synthesis tends to be broad, such being problematic.

Further, according to the above process of subjecting the droplets to pyrolysis in a pyrolysis synthesis furnace, a large amount of water vapor is formed from the droplets in the pyrolysis reaction furnace, and water dissociates to increase the oxygen partial pressure, whereby the valency of activating ions such as Eu²⁺ which are likely to maintain the valency in a reducing atmosphere tends to be unstable, and no desired emission properties tend to be obtained, such being problematic. Further, inclusion of a large amount of water vapor in the pyrolysis reaction furnace may cause waste of thermal energy, and in addition, it is hard to obtain a crystal with a high crystallinity uniformly activated by activator ions only by a treatment in the pyrolysis reaction furnace, and no phosphor having favorable emission properties can be obtained.

Further, with a purpose of improving dispersibility of the phosphor, preventing deterioration of the phosphor, improving coating and adhesive properties of the phosphor to a support, and improving surface physical properties of the phosphor such as reflectance control, the surface may be covered with e.g. a surface treating substance or pigment particles having a color (surface modifying substance). With respect to such a surface-modified phosphor, conventionally, phosphor raw material powders are mixed and filled in a baking container such as a crucible, followed by heating at a high temperature for a long period of time to obtain a baked product by a solid state reaction, and the baked product is pulverized by means of e.g. a ball mill to manufacture phosphor particles, which are introduced into an aqueous slurry of a surface modifying substance so that the surface modifying substance is attached to the surface of the phosphor particles by a wet method.

However, the phosphor particles produced by a solid state reaction consist of aggregates of primary particles and have irregular shapes, whereby adherence of the surface modifying substance to such phosphor particles having irregular shapes tends to be inadequate, and thus the surface modifying substance may be peeled off at the time of handling or coating of the phosphor particles, and no adequate performance of the surface modifying substance may be obtained in some cases. Further, when the surface of the phosphor particles is covered with the surface modifying substance, if a high covering ratio is required, it is necessary to use a large amount of the surface modifying substance for covering, and accordingly not only the cost is increased, but also exciting light and emitted light are absorbed to decrease the emission efficiency. Further, in a case where the surface modifying substance is attached by a wet method, it is carried out by means of a liquid such as water, and accordingly the adhesion step is complicated.

Accordingly, the present invention has been made to overcome the above problems, and to provide a process for producing a phosphor which has a narrow particle size distribution of phosphor particles, which has a small amount of aggregated particles, which is spherical or has a shape similar thereto, which has a high purity and a uniform chemical composition, and which has excellent emission properties, with a small energy consumption. Such a phosphor is suitable to form a homogeneous and dense high-brightness fluorescent layer when applied to e.g. a cathode ray tube, a fluorescent lamp or PDP.

Further, the present invention provides a process for producing a phosphor comprising phosphor particles which are less likely to aggregate and which have a spherical or approximately spherical shape, and a surface modifying layer which is dense, which is less likely to be peeled off and which has favorable adhesive properties, formed on the surface of the particles.

### DISCLOSURE OF THE INVENTION

The present invention made it possible to overcome the above problems by employing the following constructions.
(1) A process for producing a phosphor, which comprises spraying a phosphor raw material solution containing metal elements constituting the phosphor into a gas atmosphere to form fine droplets, drying them to form solid particles, and introducing the above solid particles into a pyrolysis synthesis furnace together with the above gas accompanying the particles, followed by heating for pyrolysis synthesis.
(2) The process for producing a phosphor according to the above (1), wherein an aqueous solution having metal salts of the above metal elements constituting a phosphor dissolved therein is used.
(3) The process for producing a phosphor according to the above (1) or (2), wherein at least 10 wt% of the metal salts dissolved in the above phosphor raw material solution are nitrates or acetates.
(4) The process for producing a phosphor according to any one of the above (1) to (3), wherein at least 50 wt% of the metal salts dissolved in the above phosphor raw material solution are nitrates or acetates.
(5) The process for producing a phosphor according to any one of the above (1) to (4), wherein a flux is contained in the above phosphor raw material solution.
(6) The process for producing a phosphor according to any one of the above (1) to (5), wherein in a case where the above phosphor is a phosphor comprising a sulfide or an oxysulfide as the main phase, a compound containing sulfur such as thiourea or thioacetoamide is added to the above phosphor raw material solution.
(7) The process for producing a phosphor according to any one of the above (1) to (6), wherein the above droplets are classified and then subjected to pyrolysis synthesis.
(8) The process for producing a phosphor according to the above (7), wherein the above classification is carried out by an inertial classifier.
(9) The process for producing a phosphor according to the above (7) or (8), wherein the above droplets are adjusted by the above classification so that the weight average particle size is within a range of from 0.5 to 20 µm, and 90 wt% of the droplets have a particle size at most double the weight average particle size.
(10) The process for producing a phosphor according to the above (9), wherein the above weight average particle size is adjusted to be within a range of from 1.0 to 10 µm.
(11) The process for producing a phosphor according to any one of the above (7) to (10), wherein the volume concentration of the above droplets in the gas is concentrated to at least twice, simultaneously with the above classification.
(12) The process for producing a phosphor according to any one of the above (1) to (11), wherein as the above atmosphere gas or the above accompanying gas, an oxidizing gas, a reducing gas or an inert gas is used.
(13) The process for producing a phosphor according to the above (12), wherein air is used as the above oxidizing gas.
(14) The process for producing a phosphor according to the above (12), wherein a mixed gas of nitrogen and hydrogen is used as the above reducing gas.
(15) The process for producing a phosphor according to the above (12), wherein hydrogen sulfide or a carbon disulfide gas is used as the above reducing gas.
(16) The process for producing a phosphor according to the above (12), wherein nitrogen containing hydrogen or carbon monoxide is used as the above reducing gas.
(17) The process for producing a phosphor according to the above (12), wherein in a case the above phosphor is a phosphor comprising a sulfide or an oxysulfide as the main phase, a gas containing sulfur as its constituting element is used as the above accompanying gas.
(18) The process for producing a phosphor according to any one of the above (1) to (17), wherein the above drying of the droplets is carried out in an oxidizing gas, reducing gas or inert gas atmosphere.
(19) The process for producing a phosphor according to any one of the above (1) to (18), wherein the above drying method of the droplets is drying by heating, and the heating rate in said drying is adjusted to at most 400°C per second.
(20) The process for producing a phosphor according to any one of the above (1) to (19), wherein the step of forming solid particles by drying is followed by the above pyrolysis synthesis step while keeping the temperature of said dried particles at at least 100°C.
(21) The process for producing a phosphor according to any one of the above (1) to (20), wherein the above pyrolysis synthesis is carried out by adjusting the heating temperature to from 500 to 1,900°C and the heating time to from 0.5 second to 10 minutes.
(22) The process for producing a phosphor according to the above (21), wherein in a case where the above phosphor is a phosphor comprising an oxide as the main phase, the above pyrolysis synthesis is carried out by adjusting the heating temperature to from 900 to 1,900°C and the heating time to from 0.5 second to 10 minutes.
(23) The process for producing a phosphor according to the above (22), wherein in the above pyrolysis synthesis step, the heating temperature is adjusted to from 1,000 to 1,900°C and the heating time to from 0.5 second to 10 minutes.
(24) The process for producing a phosphor according to the above (21), wherein the above phosphor is a phosphor comprising a sulfide as the main phase, and the above pyrolysis synthesis is carried out in a sulfurizing gas atmosphere by adjusting the heating temperature to from 500 to 1,100°C and the heating time to from 0.5 second to 10 minutes.
(25) The process for producing a phosphor according to the above (24), wherein in the above pyrolysis synthesis, the heating temperature is adjusted to from 600 to 1,050°C and the heating time to from 0.5 second to 10 minutes.
(26) The process for producing a phosphor according to the above (21), wherein the above phosphor is a phosphor comprising an oxysulfide as the main phase, and the above pyrolysis synthesis is carried out in a sulfurizing gas atmosphere by adjusting the hating temperature to from 700 to 1,300°C and the heating time to from 0.5 second to 10 minutes.
(27) The process for producing a phosphor according to the above (26), wherein in the above pyrolysis synthesis, the heating temperature is adjusted to from 800 to 1,200°C and the heating time to from 0.5 second to 10 minutes.
(28) The process for producing a phosphor according to any one of the above (1) to (27), wherein a nozzle having an ejection port for a high pressure gas at the back of a smooth surface, having a supply port for the above phosphor raw material solution at the intermediate part of the above smooth surface, and discharging fine droplets from the edge of the above smooth surface, is used, the above high pressure gas ejected from the above ejection port along the above smooth surface forms a high speed gas flow without departing from the above smooth surface, the above phosphor raw material solution is supplied from the above supply port so that it crosses said high speed gas flow, the above high speed gas flow presses said phosphor raw material solution on the above smooth surface to form a thin film flow, and said thin film flow is discharged from the edge of the above smooth surface by the above high speed gas flow to form the above fine droplets.
(29) The process for producing a phosphor according to any one of the above (1) to (27), wherein a nozzle having two smooth surfaces which cross each other to form a cross sectional V shape at the edge part, having ejection ports for high pressure gases at the back of the respective smooth surfaces, having a supply port for the above phosphor raw material solution at the intermediate part of at least one of the above smooth surfaces, and discharging fine droplets from the edge part of the above smooth surfaces, is used, the above high pressure gases ejected from the above respective ejection ports along the above two smooth surfaces form two high speed gas flows without departing from the above smooth surfaces, the above phosphor raw material solution is supplied from the above supply port so that it crosses at least one of said high speed gas flows, said phosphor raw material solution is pressed on the above smooth surface by the above high speed gas flow to form a thin film flow, and the above thin film flow is discharged by the above two high speed gas flows which collide with each other at the edge having the above cross sectional V shape to form the above fine droplets.
(30) The process for producing a phosphor according to the above (28) or (29), wherein the ejection direction of the above high pressure gas have an angle with the above smooth surface.
(31) The process for producing a phosphor according to any one of the above (28) to (30), wherein a nozzle having a ring shape at the edge of the above smooth surface is used.
(32) The process for producing a phosphor according to any one of the above (28) to (31), wherein the above nozzle is disposed in the pyrolysis synthesis furnace, and the droplets discharged from the above nozzle are subjected to pyrolysis synthesis in a gas atmosphere accompanying said droplets.
(33) The process for producing a phosphor according to any one of the above (1) to (27), wherein a nozzle having plural solution flow paths, provided with piezoelectric element heads at the edge part of the respective solution flow paths, is used, and the above phosphor raw material solution is discharged from the above nozzle to the gas atmosphere to form the above fine droplets.
(34) The process for producing a phosphor according to any one of the above (1) to (27), wherein a nozzle having plural solution flow paths, provided with thermal heads at the edge part of the respective solution flow paths, is used, and the above phosphor raw material solution is discharged from the above nozzle to the gas atmosphere as fine droplets to form the above fine droplets.
(35) The process for producing a phosphor according to any one of the above (1) to (34), wherein the water vapor concentration of the above gas accompanying the above solid particles is reduced to at most 1 vol%, followed by the above pyrolysis synthesis.
(36) The process for producing a phosphor according to the above (35), wherein the water vapor concentration of the gas accompanying the above solid particles is reduced to at most 0.1 vol%.
(37) The process for producing a phosphor according to the above (35) or (36), wherein part of the gas accompanying the above solid particles is removed by a classifier, and a gas having a low water vapor concentration is added to the rest of the above gas to reduce the water vapor concentration of the gas accompanying the above solid particles.
(38) The process for producing a phosphor according to the above (37), wherein the gas removed by the above classifier is cooled to remove water content in said gas, and the gas having a low water vapor concentration is recovered and used as the above atmosphere gas for formation of droplets.
(39) The process for producing a phosphor according to any one of the above (1) to (38), wherein after the above classification is carried out, a gas having a water vapor concentration lower than the above accompanying gas is added, followed by pyrolysis synthesis.
(40) The process for producing a phosphor according to the above (39), wherein as the gas to be added to the above accompanying gas, hydrogen, carbon monoxide, nitrogen or argon containing a small amount of hydrogen, or nitrogen or argon containing a small amount of carbon monoxide, is used.
(41) The process for producing a phosphor according to the above (39), wherein in a case where the above phosphor is a phosphor comprising a sulfide or an oxysulfide as the main phase, the gas to be added to the above accompanying gas contains hydrogen sulfide or carbon disulfide.
(42) The process for producing a phosphor according to any one of the above (1) to (41), wherein the above pyrolysis synthesis in the above pyrolysis synthesis furnace is carried out at a heating temperature of from 600 to 1900°C for a heating time of from 0.5 second to 10 minutes, and the obtained pyrolysis product is collected, filled in a baking container for re-heating and subjected to a re-heat treatment at a heating temperature lower than the heating temperature of the above pyrolysis synthesis by at least 100°C and at a heating temperature of from 500 to 1800°C for a heating time of from 10 minutes to 24 hours.
(43) The process for producing a phosphor according to the above (42), wherein the above phosphor is a phosphor comprising an oxide as the main phase, in the above pyrolysis synthesis is carried out by adjusting the heating temperature to from 900 to 1,900°C and the heating time to from 0.5 second to 10 minutes, and the above re-heat treatment is carried out by adjusting the heating temperature to from 800 to 1,800°C, which is lower than the heating temperature in the above pyrolysis synthesis by at least 100°C, and the heating time to from 10 minutes to 24 hours.
(44) The process for producing a phosphor according to the above (42), wherein in a case where the above phosphor is a phosphor comprising a sulfide as the main phase, the above pyrolysis synthesis is carried out by adjusting the heating temperature to from 600 to 1,100°C and the heating time to from 0.5 second to 10 minutes, and the above re-heat treatment is carried out by adjusting the heating temperature to from 500 to 1,000°C, which is lower than the heating temperature in the above pyrolysis synthesis by at least 100°C, and the heating time to from 10 minutes to 24 hours.
(45) The process for producing a phosphor according to the above (42), wherein in a case where the above phosphor is a phosphor comprising an oxysulfide as the main phase, the above pyrolysis synthesis is carried out by adjusting the heating temperature to from 600 to 1,300°C and the heating time to from 0.5 second to 10 minutes, and the above re-heat treatment is carried out by adjusting the heating temperature to from 500 to 1,200°C, which is lower than the heating temperature in the above pyrolysis synthesis by at least 100°C, and the heating time to from 10 minutes to 24 hours.
(46) The process for producing a phosphor according to any one of the above (42) to (45), wherein as the atmosphere gas in the above re-heat treatment, an oxidizing gas, or a reducing or inert gas is used.
(47) The process for producing a phosphor according to the above (46), wherein as the above reducing gas, a mixed gas of hydrogen and nitrogen, a mixed gas of hydrogen and argon, a mixed gas of carbon monoxide and nitrogen or a mixed gas of carbon monoxide and argon is used.
(48) The process for producing a phosphor according to the above (46), wherein as the above inert gas, nitrogen or argon is used.
(49) The process for producing a phosphor according to the above (46), wherein hydrogen sulfide or carbon disulfide is added to the above reducing gas or inert gas.
(50) The process for producing a phosphor according to any one of the above (42) to (49), wherein the heating temperature in the above re-heat treatment step is adjusted to be lower than the heating temperature in the above pyrolysis synthesis step by at least 200°C.
(51) The process for producing a phosphor according to any one of the above (1) to (50), wherein the above phosphor raw material solution is sprayed into the gas atmosphere to form fine droplets, they are dried to form solid particles, a surface modifying substance is attached to the surface of said solid particles, and then the solid particles are introduced into a pyrolysis synthesis furnace together with the accompanying gas and subjected to pyrolysis.
(52) The process for producing a phosphor according to any one of the above (1) to (50), wherein the above phosphor raw material solution is sprayed into the gas atmosphere to form fine droplets, they are dried to form solid particles, which are introduced into a pyrolysis synthesis furnace together with the accompanying gas and subjected to pyrolysis, and then a surface modifying substance is attached to the surface of said pyrolysis product particles.
(53) The process for producing a phosphor according to the above (51) or (52), wherein after the surface modifying substance is attached to the surface of the above pyrolysis product particles, a heat treatment is further carried out for from 0.5 second to 10 minutes.
(54) The process for producing a phosphor according to any one of the above (51) to (53), wherein the above surface modifying substance is formed into an aqueous solution or a suspension, which is sprayed and attached to the surface of the above dried particles or the above pyrolysis product particles in the accompanying gas.
(55) The process for producing a phosphor according to the above (54), wherein static electricity is imparted to droplets of the above surface modifying substance, and/or the above dried particles or the above pyrolysis product particles, and the above droplets are attached to the surface of the above particles by the static electricity.
(56) The process for producing a phosphor according to any one of the above (51) to (53), wherein static electricity is imparted to a powder of the above surface modifying substance, and/or the above dried particles or the above pyrolysis product particles, and the above powder is attached to the surface of the above particles by the static electricity.

### BRIEF DESCRIPTION OF THE DRAWINGS

Fig. 1: A perspective view illustrating one example of a nozzle to be used to form the raw material solution into droplets in the present invention.
Fig. 2: A sectional view illustrating the nozzle in Fig. 1 at an A-A' section.
Fig. 3: A perspective view illustrating another example of a nozzle to be used to form the raw material solution into droplets in the present invention.
Fig. 4: A sectional view illustrating the nozzle in Fig. 3 at a B-B' section.
Fig. 5: A perspective view illustrating still another example of a nozzle to be used to form the raw material solution into droplets in the present invention.
Fig. 6: A sectional view illustrating the nozzle in Fig. 5 at a C-C' section.
Fig. 7 to Fig. 9: Schematic sectional views illustrating still another example of a nozzle to be used to form the raw material solution into droplets in the present invention.
Fig. 10, Fig. 11: Flow charts illustrating a production process of a phosphor having a surface modifying layer of the present invention.
   1: smooth surface
   2: gas ejection port
   3: solution supply port
   4: edge of the nozzle
   5: fine droplets
   G, G': gas flow path
   L: liquid flow path
   A: piezoelectric element
   D: diaphragm
   H: heat resistance element
   P: protective layer
   E: electrode

### BEST MODE FOR CARRYING OUT THE INVENTION

A phosphor raw material solution to be used in the present invention is a solution containing metal elements constituting the phosphor, and preferably a solution of mainly a water soluble substance such as an inorganic metal salt or an organic metal compound such as a metal complex (hereinafter referred to simply as "metal salt"), which decomposes into an oxide, sulfide or oxysulfide when heated to a high temperature in an atmosphere in the pyrolysis synthesis step. Here, it is also possible to use an aqueous metal salt solution obtained by dissolving oxides or sulfides of the metal elements constituting the phosphor in an acid. In order to synthesize the phosphor easily, it is preferred to use an aqueous nitrates solution or an aqueous acetates solution of the metal elements constituting the phosphor. When the aqueous nitrate solution or the aqueous acetate solution is used, nitrate particles or acetate particles in a fine droplet state are formed, which easily decompose by heating to form a phosphor.

In the present invention, at least 10 wt%, more preferably at least 50 wt%, of the metal salts dissolved in the phosphor raw material solution are nitrates or acetates. Into such an aqueous metal salt solution, a metal element other than the metal elements constituting the phosphor or an additive may be incorporated with various purposes.

In order to synthesize a phosphor comprising a sulfide or an oxysulfide as the main phase, it is preferred to dissolve a compound containing sulfur such as thiourea or thioacetoamide in the phosphor raw material solution.

Further, when a small amount of a flux is added and incorporated in the aqueous solution, spherical phosphor particles having a high crystallinity can be produced by a pyrolysis reaction at a relatively low temperature for a short period of time. Specific examples of the flux include an alkaline metal halide salt, a alkaline earth metal halide metal salt, an ammonium halide salt, boric acid, an alkali borate, phosphoric acid and an alkali phosphate.

Here, in order to obtain favorable emission properties, it is preferred to use a raw material having a low content of impurity elements such as iron or nickel to be a killer center.

It is preferred that phosphor raw materials are put in water or an acid, followed by stirring for complete dissolution. The concentration of the respective elements in the solution is adjusted in accordance with the diameter of fine droplets relative to the diameter of phosphor particles. Namely, when the ratio of the droplet diameter relative to the diameter of the phosphor particles is high, the solute concentration in the solution is made to be low, and if the ratio is low, the solute concentration is made to be high. In order to synthesize a favorable phosphor, the solute concentration C of the metal elements in the aqueous solution (C represents molarlity and the total number of mols of the entire metal elements contained in 1 ℓ of water) is preferably adjusted to be within a range of 0.01≦C≦5.

As a process of forming fine droplets from the phosphor raw material solution, various conventionally known processes may be employed, and the following process may, for example, be mentioned. Namely, (1) a process wherein a high pressure gas is ejected along a smooth surface to form a high speed gas flow, a phosphor raw material solution is supplied from a supply port provided at the intermediate part of the smooth surface so that it crosses said high speed gas flow, said solution is pressed on the smooth surface by the above high speed gas flow to form a thin film flow, and said thin film flow is discharged from the edge of the smooth surface by the high speed gas flow to form fine droplets, (2) a process which is the same as the above process (1) in principle, wherein two smooth surfaces are used, their edges are made to cross each other to form a cross sectional V shape, the above high speed gas flows are formed on these two smooth surfaces, a phosphor raw material solution is supplied from a supply port provided at the intermediate part of at least one of the above smooth surfaces so that it crosses the above high speed gas flow, said solution is pressed on the above smooth surface by the above high speed gas flow to form a thin film flow, and said thin film flow is discharged as fine droplets from the edge of the smooth surfaces by the high speed gas flows which collide with each other at the edge of the nozzle (U.S. Patent 5,845,846), (3) a process wherein a nozzle having plural solution flow paths, provided with piezoelectric element heads at the edge portion of the respective solution flow paths, is used, and the above phosphor raw material solution is discharged as fine droplets from the above nozzle to the gas atmosphere (Japanese Patent No. 2866848), (4) a process wherein a nozzle having plural solution flow paths, provided with thermal heads at the edge portion of the respective solution flow paths, is used, and the above phosphor raw material solution is discharged as fine droplets from the above nozzle to the gas atmosphere, (5) a process of spraying a liquid while drawing it up with a pressurized air to form droplets having an average particle size of from 1 to 50 µm, (6) a process of applying ultrasonic wave at a level of 2 MHz in frequency from piezoelectric crystals to form droplets having an average particle size of from 4 to 10 µm, (7) a process of oscillating an orifice having a pore size of from 10 to 20 µm by an oscillator to form droplets having an average particle size of from 5 to 50 µm, (8) a process of letting a phosphor raw material solution fall on a rotating disk at a constant rate to form droplets having an average particle size of from 20 to 100 µm by centrifugal force, or (9) a process of applying a high voltage to the liquid surface to form droplets having an average particle size of from 0.5 to 10 µm.

Droplets of the phosphor raw material solution having metal salts constituting the phosphor dissolved therein are formed by a droplet formation means by these processes, then these droplets are dried and heated for pyrolysis synthesis, or the above nozzle is disposed in a pyrolysis synthesis furnace to carry out pyrolysis synthesis simultaneously with formation of the fine droplets, whereby a phosphor having a high purity and a uniform chemical composition, a narrow particle size distribution, a small amount of aggregated particles and having a spherical shape can be produced.

In the present invention, the above processes (1) to (4) are preferred, and the above process (2) is particularly preferred among the above-described droplet formation means, from such viewpoints that fine and uniform droplets are likely to be obtained, the particle size control of the droplets can easily be carried out, a phosphor having less aggregation and a narrow particle size distribution can be obtained, and a phosphor which is more suitable for e.g. a cathode ray tube, a fluorescent lamp or PDP can be obtained.

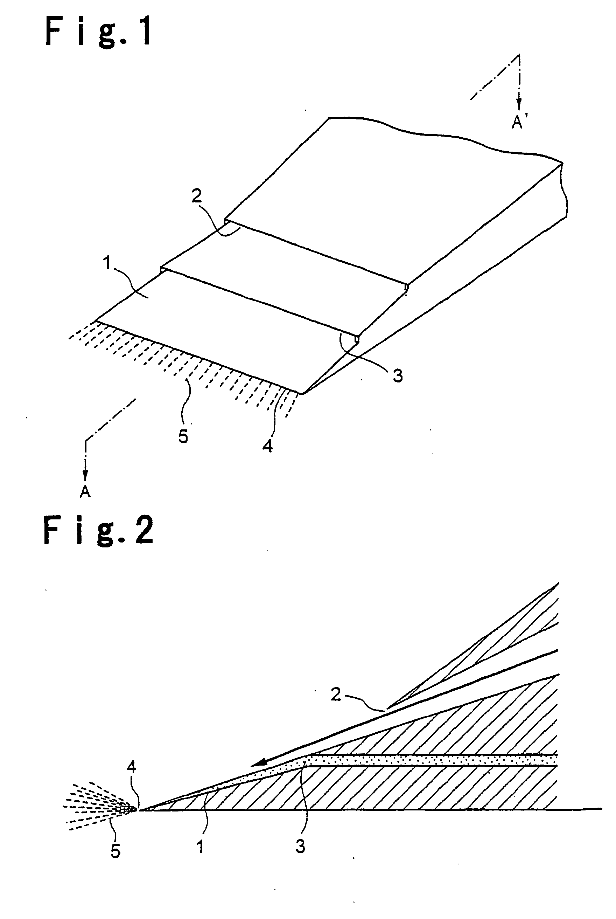

Fig. 1 is a perspective view illustrating one example of a nozzle to be used for the droplet formation method as disclosed in the above (1), and Fig. 2 is a sectional view of Fig. 1 at an A-A' section. In this example, from a gas ejection port 2 provided at the rear end of a smooth surface 1, a high pressure gas under a pressure of preferably from 0.05 to 1.5 MPa is ejected along the smooth surface 1 to form a high speed gas flow. The smooth surface 1 is preferably slanted at an angle of from 10 to 80° with the horizontal plane. A phosphor raw material solution is supplied from a liquid supply port 3 provided at the intermediate part of the smooth surface 1 so that it crosses the above high speed gas flow with an angle of preferably from 1 to 90°, and the phosphor raw material solution is pressed by the above high speed gas flow on the smooth surface 1 and stretched thinly to form a thin film flow. The thin film flow is discharged from the edge 4 of the smooth surface 1 by the above high speed gas flow to form fine droplets 5.

Here, Fig. 1 illustrates a nozzle wherein the smooth surface 1 is plate-like and the outer appearance of the nozzle is plate-like, however, the smooth surface 1 may be curved, the entire nozzle may be made to have a cylindrical shape, and the edge of the nozzle (the edge 4 of the smooth surface) may be formed into a ring form. In such a case, the outer peripheral surface of the cylinder is taken as the smooth surface 1, a gas ejection port 2 is provided in a form of a ring at the rear end of said smooth surface 1, and a liquid supply port 3 in a form of a ring is provided at the intermediate part of the ring-form smooth surface 1, and a high pressure gas is ejected from the ring-form ejection port 2 along the ring-form smooth surface 1 to form a high speed gas flow. Then, a phosphor raw material solution is supplied in a form of a ring from the ring-form liquid supply port 3 provided at the intermediate part of the smooth surface 1 so that it crosses the above high speed gas flow. The supplied phosphor raw material solution is pressed on the smooth surface 1 by the above high speed gas flow, and stretched thinly to form a thin film flow. This thin film flow is discharged in a form of a ring from the edge 4 of the smooth surface 1 by the action of the above high speed gas flow to form fine droplets 5.

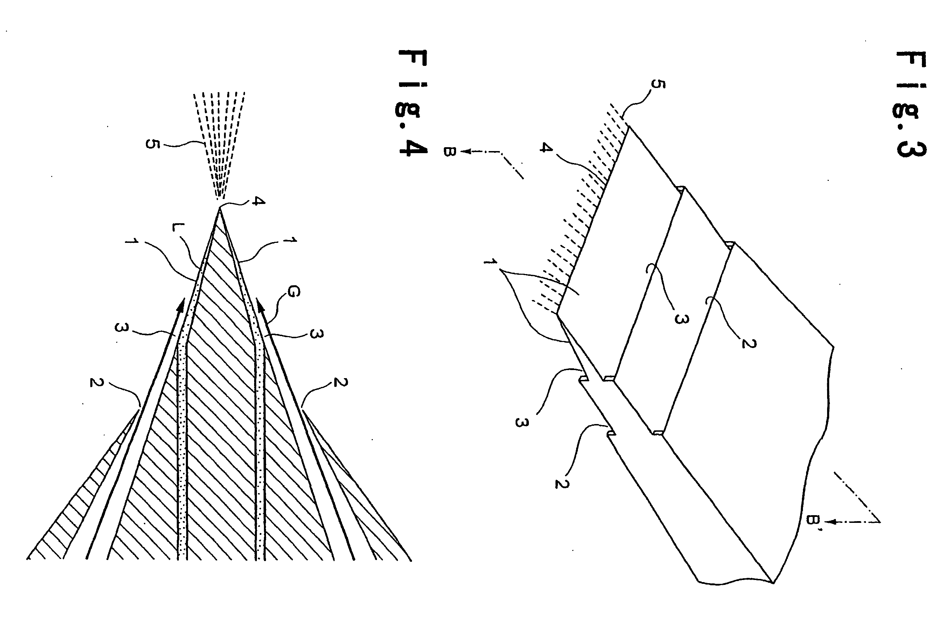

Fig. 3 is a perspective view illustrating a nozzle to be used for the droplet formation method as disclosed in the above (2), and Fig. 4 is a sectional view at a B-B' section. The nozzle is a nozzle, the outer appearance of which is plate-like, similar to the nozzle illustrated in Fig. 1, and has two slanted smooth surfaces 1,1, wherein the two smooth surfaces 1,1 cross with each other in a cross sectional V shape at their edges. The angle of the V shape is preferably from 10 to 80°. From gas ejection ports 2,2 provided at the rear end of the smooth surfaces 1,1, respectively, a high pressure gas is ejected along the smooth surfaces 1,1 to form high speed gas flows. From two liquid supply ports 3,3 provided at the intermediate part of the smooth surfaces 1,1, a phosphor raw material solution is supplied so that it crosses the high speed gas flows. The raw material solution is pressed on the smooth surfaces 1,1 by the high speed gas flows and stretched thinly to form thin film flows. The thin film flows are discharged from the edge of the above smooth surfaces by the two high speed gas flows which collide with each other at the edge 4 of the smooth surfaces to form fine droplets 5.

Fig. 3 illustrates a nozzle wherein the smooth surfaces 1,1 are plate-like and the outer appearance of the nozzle is plate-like, however, similar to the above-described modified example in Fig. 1, also in the nozzle having a cross sectional V shape at the edge, the smooth surfaces 1,1 may be curved to form the entire nozzle into a cylinder, and the droplets 5 may be discharged so that the edge 4 of the nozzle is formed into a ring.

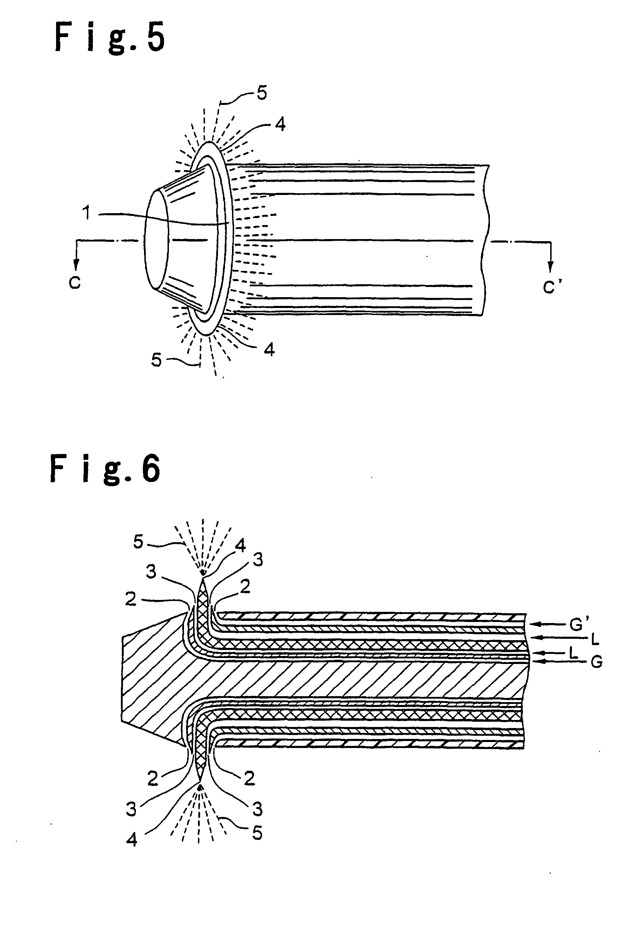

Fig. 5 is a perspective view illustrating one example of the above-mentioned nozzle wherein the outer appearance is cylindrical and the edge part has a cross sectional V shape, and Fig. 6 is a sectional view at a C-C section. In such a nozzle, high speed gas flows ejected from high pressure gas ejection ports 2,2 press a phosphor raw material solution liquid supplied from supply ports 3,3 provided in the middle of the flow paths on smooth surfaces 1,1 to stretch them thinly to form thin film flows. Said thin film flows are discharged in the form of a ring from the edge 4 of the smooth surface placed in a form of a ring by the two high speed gas flows which collide with each other to form fine droplets 5. In the nozzle of this example, the edge 4 of the smooth surfaces 1,1 is inflected in a circle direction of the ring-form nozzle, and droplets of the phosphor raw material solution are discharged from the edge 4 of the ring-form smooth surfaces 1,1 toward the periphery side of the nozzle. As mentioned above, in the ring-form nozzle, the edge can be formed with an optional angle from the axis direction of the nozzle to the circle direction. Taking treatments such as drying and pyrolysis synthesis of droplets into consideration, it is preferred to provide the above angle since the drying and the pyrolysis can be done more efficiently when the droplets are widely dispersed in the atmosphere gas.

In a case of forming the phosphor raw material solution into fine droplets by using such a nozzle having two slanted smooth surfaces which cross each other at the edge, having a cross sectional V shape, a liquid supply port 2 which supplies the phosphor raw material solution may be provided on only one of the two smooth surfaces 1,1, and a gas flow accompanying the phosphor raw material solution as one of the two high speed gas flows which collide with each other at the edge of the nozzle, and a high speed gas flow accompanying no phosphor raw material solution as the other one of the high speed gas flows, may be collided with each other.

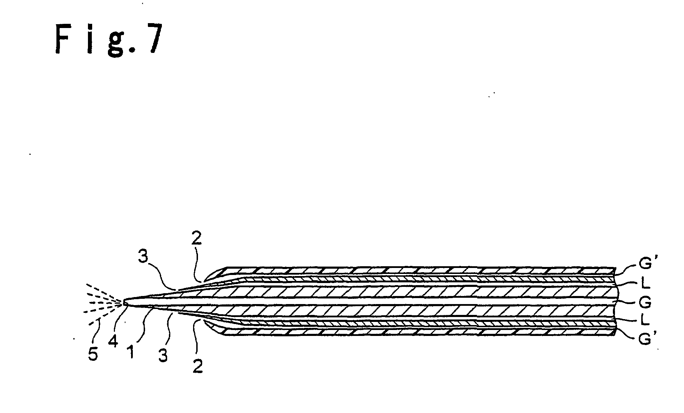

Fig. 7 is a sectional view illustrating a still another example of a nozzle having a cross sectional V shape, as the above process (2). This example illustrates a pencil type wherein the outer appearance is cylindrical, and a gas flow path G, a liquid flow path L and a gas flow path G' are sequentially formed from the core to the periphery of the cylinder in parallel with the axis, and a high pressure gas is ejected from a high pressure gas ejection port 2 provided in the form of a ring in the middle of the gas flow path G' at the periphery side along a ring-form smooth surface 1 to form a high speed gas flow. A phosphor raw material solution is supplied from a ring-shape liquid supply port 3 provided at the intermediate part of the smooth surface 1 so that it crosses the high speed gas flow, and said raw material solution is pressed by the high speed gas flow on the ring-form smooth surface 1 and stretched thinly to form a thin film flow. The high speed gas flow discharged from the gas flow path G' located at the outside (periphery side) relative to the circle direction at the edge 4 of the smooth surface, and a gas flow discharged from the gas flow path G located at the core, are collided with each other at the edge 4 of the ring-form smooth surface 1, and the above thin film flow is discharged from the edge by the gas flow to form fine droplets 5. Here, the ejection port 2 of the high pressure gas and the raw material solution supply port 3 may be in a form of a slit or may have a plurality of independent small holes.

By drying and heating the droplets for pyrolysis synthesis, a phosphor activated by an activator can be obtained. It is necessary to provide the liquid supply port 3 ahead of the high pressure gas ejection port 2 in a direction of movement of the high pressure gas flow.

The fine droplets 5 of the phosphor raw material solution thus formed may, for example, be dried while they are falling in the gas flow, and introduced into a pyrolysis synthesis furnace by the gas flow to produce a phosphor, otherwise, the above nozzle may be disposed in the pyrolysis synthesis furnace and the atmosphere gas during the pyrolysis synthesis may be used as the above high pressure gas so that formation of droplets and pyrolysis synthesis are carried out simultaneously.

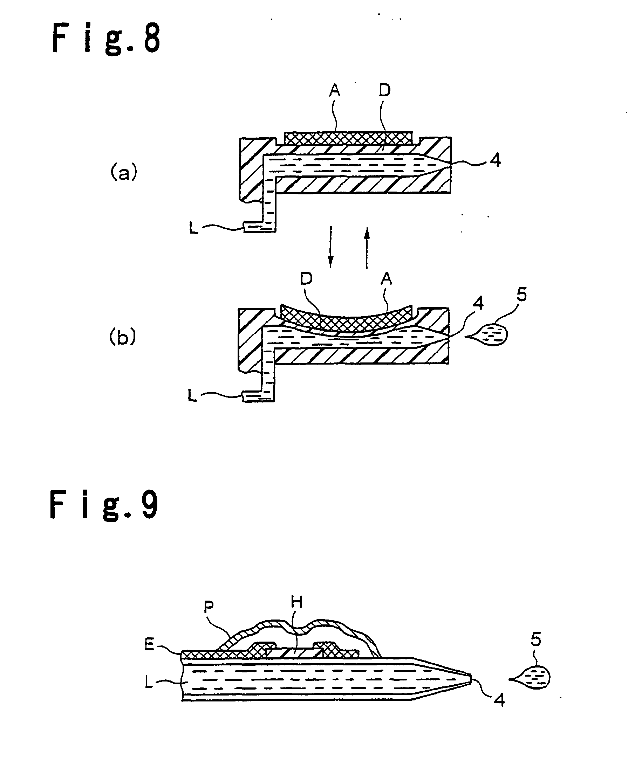

Fig. 8 is a schematic cross-sectional view illustrating one of plural nozzles provided with a piezoelectric element head nozzle, as the above process (3), and a piezoelectric element A (Fig. 8a)) made of a piezoelectric material is provided to the inner wall or outer wall at the edge part of the solution flow path L (in the vicinity of the edge 4 of the nozzle at which the phosphor raw material solution is discharged). An alternating current electrical energy is applied to this piezoelectric element to deform the piezoelectric element A (Fig. 8b)), and at that time, the volume of the solution flow path L at the edge part is changed so that fine droplets 5 made of the phosphor raw material solution are ejected from the edge 4 of the solution flow path L.

Further, Fig. 9 is a schematic sectional view illustrating one of nozzles provided with plural thermal heads, as the above process (4), wherein the inner wall or outer wall of a solution flow path L is instantaneously heated by means of a heating means such as a heating element H at the edge part of the solution flow path L (in the vicinity of the edge part 4 of the nozzle at which the phosphor raw material solution is discharged) so that bubbles are formed in the phosphor raw material solution, and the raw material solution is ejected by the pressure of the bubbles to obtain fine droplets 5.

As the atmosphere gas at the time of formation of the fine droplets of the present invention, air, oxygen, nitrogen, hydrogen, nitrogen containing a small amount of hydrogen or argon containing a small amount of hydrogen may, for example, be used, however, in order to obtain favorable emission properties, it is important to select the gas depending upon the type of the activator ion contributing to light emission. For example, in a case where the activating ion is e.g. Eu³⁺ which is likely to maintain the valency in an oxidizing atmosphere, preferred is an oxidizing gas such as air or oxygen, and in a case where the activating ion is e.g. Eu²⁺ which is likely to maintain the valency in a reducing atmosphere, preferred is a reducing gas such as hydrogen, or nitrogen or argon containing a small amount of hydrogen. In the case of producing a phosphor comprising a sulfide or an oxysulfide as the main phase, it is preferred to use a hydrogen sulfide gas, a carbon disulfide gas or a sulfurizing gas containing sulfur as its constituting element.

It is preferred to carry out classification before the fine droplets are dried to form metal salt particles to adjust the particle size so that the weight average particle size is from 0.5 to 20 µm, and 90 wt% of the fine droplets have a particle size at most double the weight average particle size. When phosphor particles are produced from droplets having a narrow particle size distribution, phosphor particles having an average particle size within a range of from 0.1 to 15 µm can be obtained, whereby favorable coating properties at the time of forming a fluorescent layer can be obtained. Fine droplets removed before drying may be recovered and reused as an aqueous metal salt solution i.e. the raw material.

If small fine droplets having a weight average particle size smaller than 0.5 µm increase, phosphor particles to be obtained tend to be extremely small, and when a phosphor slurry is prepared, the viscosity tends to be high, and coating properties of the fluorescent layer tend to be worse. If droplets larger than 20 µm increase, phosphor particles to be obtained tend to be extremely large, whereby a dense and high definitive fluorescent layer is less likely to be formed. It is more preferred to adjust the particle size by classification so that the weight average particle size is from 1 to 10 µm and 90 wt% of the fine droplets are fine droplets having a particle size at most double, more preferably at most 1.5 times the weight average particle size.

In order to increase the production efficiency of the phosphor in the pyrolysis synthesis furnace, it is preferred to concentrate the droplet volume per unit volume of the droplet-accompanying gas at least double at the time of classification. As a classifier to classify the droplets, a classifier by gravity, a centrifugal classifier or an inertial classifier may, for example, be used, and among them, an inertial classifier is suitable. The inertial classifier is suitable to remove droplets having a particle size smaller than the lower limit with part of the accompanying gas. Here, in a case where the above nozzle is disposed in the pyrolysis synthesis furnace and droplets discharged from said nozzle is subjected to pyrolysis together with the accompanying gas, the step of classifying the droplets as a step prior to the pyrolysis synthesis step may be omitted.

As a method of drying the fine droplets, although freeze drying or vacuum drying may be carried out, drying by heating is suitable. For example, a means of forming the above fine droplets is disposed upstream of a cylindrical container, and a heating zone for drying is provided downstream of the container, the fine droplets are discharged in the accompanying gas which flows downstream, and the droplets can be dried while they are falling.

The metal salt particles dried by heating are preferably transferred to the pyrolysis synthesis furnace while keeping their temperature at at least 100°C. If the temperature is less than 100°C, water vapor generated during the drying concentrates, whereby the metal salt particles are partially dissolved and aggregated, and no phosphor particles having desired shape and particle size can be obtained in some cases.

In the present invention, the gas which accompanies the metal salt particles or metal complex particles obtained by the drying step is preferably subjected to pyrolysis synthesis after the water vapor concentration is reduced to at most 1 vol%, preferably at most 0.1 vol%. Water vapor is generated in the step of drying the droplets prior to the pyrolysis step, and accordingly if the accompanying gas is directly introduced into the pyrolysis synthesis furnace, a large amount of water vapor is contained, and water heated to high temperature in the pyrolysis synthesis furnace dissociates to increase the oxygen partial pressure. With respect to a phosphor containing activating ions such as Eu²⁺ which are likely to maintain the valency in a reducing atmosphere, if the water vapor concentration in the accompanying gas exceeds 1 vol%, the activating ions tend to be unstable, and no desired emission properties may be obtained. Inclusion of a large amount of water vapor in the pyrolysis synthesis furnace may be a cause of waste of thermal energy.

As the method of decreasing the above water vapor concentration, similar to the case of classifying the droplets, a method of removing part of the accompanying gas by using a classifier such as a classifier by gravity, a centrifugal classifier or an inertial classifier, to increase the volume of the metal salt particles or metal complex particles per volume of the accompanying gas, and then adding a gas having a low water vapor concentration, may be mentioned. Here, it is preferred that the gas removed by the above classifier is once cooled so that the water vapor is condensed and separated as water, and then the gas is returned to the droplet formation step.

The pyrolysis synthesis is carried out preferably in the pyrolysis synthesis furnace by adjusting the pyrolysis synthesis temperature to from 500 to 1,900°C and the reaction time to from 0.5 second to 10 minutes. If the pyrolysis synthesis temperature is lower than 500°C or the reaction time is shorter than 0.5 second, the metal salts may not adequately be pyrolyzed, and no phosphor may be prepared. Further, not only the crystallinity tends to be low, but also the activator ions may not adequately activate the crystals, whereby the emission properties tend to be low. A temperature higher than 1,900°C or a reaction time longer than 10 minutes tends to cause a waste of energy.

In order to produce a phosphor comprising an oxide as the main phase, having a high crystallinity and favorable emission properties, it is preferred to adjust the pyrolysis synthesis temperature to from 900°C to 1,900°C and the heating time to from 0.5 second to 10 minutes, and it is more preferred to adjust the pyrolysis synthesis temperature to from 1,000°C to 1,900°C and the heating time to from 0.5 second to 10 minutes. In a case of producing a phosphor comprising an oxide as the main phase, if the pyrolysis synthesis temperature is lower than 900°C or the reaction time is shorter than 0.5 second, the metal salts may not adequately be pyrolyzed, and no oxide phosphor comprising a desired crystal phase may be formed. Further, the activator ions may not adequately activate the crystals, whereby the emission properties tend to be low.

In order to produce a phosphor comprising a sulfide as the main phase, having a high crystallinity and favorable emission properties, it is preferred to adjust the pyrolysis synthesis temperature to from 500°C to 1,100°C and the heating time to from 0.5 second to 10 minutes, and it is more preferred to adjust the temperature to from 600°C to 1,050°C and the heating time to from 0.5 second to 10 minutes. If the pyrolysis synthesis temperature is lower than 500°C or the reaction time is shorter than 0.5 second, the metal salts may not adequately be pyrolyzed, and no sulfide phosphor comprising a desired crystal phase may be formed. Further, the activator ions may not adequately activate the crystals, whereby the emission properties tend to be low.

In order to produce a phosphor comprising an oxysulfide as the main phase, having a high crystallinity and favorable emission properties, it is preferred to adjust the pyrolysis synthesis temperature to from 700°C to 1,300°C and the heating time to from 0.5 second to 10 minutes, and it is more preferred to adjust the temperature to from 800°C to 1,200°C and the heating time to from 0.5 second to 10 minutes. If the pyrolysis synthesis temperature is lower than 600°C or the reaction time is shorter than 0.5 second, the metal salts may not adequately be pyrolyzed, and no oxysulfide phosphor comprising a desired crystal phase may be formed. Further, the activator ions may not adequately activate the crystals, whereby the emission properties tend to be low.

In the present invention, the pyrolysis synthesis may be carried out in a one-stage process, or phosphor particles containing a desired crystal phase, which are a pyrolysis product obtained by the pyrolysis synthesis as a prior stage, may be subjected to a re-heat treatment. The re-heat treatment may be carried out, for example, in a state of the particles being packed in a sealed container. This re-heat treatment further increases the crystallinity of the phosphor particles, and at the same time, uniformly introduces activator ions into the inside of the crystals for activation, and thus the treatment is effective to obtain spherical phosphor particles having favorable emission properties.

Namely, the pyrolysis product obtained by the pyrolysis synthesis under the above conditions is packed in a baking container, and re-heated by adjusting the heating temperature to be lower than the heating temperature at the time of pyrolysis synthesis by at least 100°C and to at most 1,800°C, and the heating time within a range of from 10 minutes to 24 hours, whereby a phosphor having more favorable emission properties can be obtained.

Here, in order to more securely prevent formation of aggregated particles at the time of re-heat treatment, the re-heat treatment temperature is particularly preferably lower than the pyrolysis synthesis temperature by at least 200°C.

In the pyrolysis synthesis of the present invention, the heating temperature in the pyrolysis synthesis furnace is adjusted to from 600 to 1,900°C and the heating time within a range of from 0.5 second to 10 minutes, and in the re-heat treatment, the pyrolysis product is packed in the baking container, and the heating temperature is adjusted to be lower than the heating temperature in the pyrolysis synthesis by at least 100°C and to from 500 to 1,800°C, and the heating time within a range of from 10 minutes to 24 hours, whereby a phosphor having favorable emission properties can be obtained.

In a case where the phosphor of the present invention is a phosphor comprising an oxide as the main phase, the pyrolysis synthesis is carried out by adjusting the heating temperature to from 900 to 1,900°C and the heating time within a range of from 0.5 second to 10 minutes, and the re-heat treatment is carried out by adjusting the heating temperature to be lower than the heating temperature of the pyrolysis synthesis by at least 100°C and from 800 to 1,800°C, and the heating time within a range of from 10 minutes to 24 hours, whereby a phosphor having favorable emission properties can be obtained.

If the pyrolysis synthesis temperature is lower than 900°C or the reaction time is shorter than 0.5 second, the metal salts may not adequately be pyrolyzed, whereby no oxide phosphor comprising a desired crystal phase may be formed. Further, the activator ions may not adequately activate the crystals, whereby emission properties tend to be low. If such an oxide powder is subjected to a re-heat treatment adjusting the heating temperature to from 800 to 1,800°C and the reaction time within a range of from 10 minutes to 24 hours, although favorable crystallinity may be obtained, a large number of aggregated particles are likely to form, whereby no dense fluorescent layer can be formed, and no desired emission properties may be obtained. If the pyrolysis synthesis temperature is higher than 1,900°C or the reaction time is longer than 10 minutes, an unnecessary energy tends to be wasted.

On the other hand, if the heating temperature in the re-heat treatment is lower than 800°C or the heating time is shorter than 10 minutes, not only the crystallinity tends to be low, but also the activator ions may not uniformly activate the crystals, whereby no phosphor having favorable emission brightness may be obtained. Further, if the heating temperature of the re-heat treatment is higher than 1,800°C or the heating time is longer than 24 hours, not only an unnecessary energy tends to be consumed, but also a large number of aggregated particles are likely to form, whereby no dense fluorescent layer may be formed, and no desired emission properties may be obtained.

Further, in a case where the phosphor of the present invention is a phosphor comprising a sulfide as the main phase, the re-heat treatment is carried out by adjusting the heating temperature to be lower than the heating temperature of the pyrolysis synthesis by at least 100°C and to from 400 to 1,000°C, and the heating time within a range of from 10 minutes to 24 hours, whereby a phosphor having favorable emission properties can be obtained. If a pyrolysis product (sulfide powder) obtained under such conditions that the pyrolysis synthesis temperature is lower than 500°C or the reaction time is shorter than 0.5 second, is subjected to a re-heat treatment by adjusting the heating temperature to from 500 to 1,000°C and the reaction time within a range of from 10 minutes to 24 hours, although favorable crystallinity may be obtained, a large number of aggregated particles are likely to form, whereby no dense fluorescent layer may be formed, and no desired emission properties may be obtained. If the pyrolysis synthesis temperature is higher than 1,100°C or the reaction time is longer than 10 minutes, an unnecessary energy tends to be wasted. On the other hand, if the heating temperature of the re-heat treatment is lower than 500°C or the heating time is shorter than 10 minutes, not only the crystallinity tends to be low, but the activator ions may not uniformly activate the crystals, whereby no phosphor having favorable emission brightness may be obtained. Further, if the heating temperature of the re-heat treatment is higher than 1,000°C or the heating time is longer than 24 hours, not only an unnecessary energy tends to be consumed, but also a large number of aggregated particles are likely to form, whereby no dense fluorescent layer may be formed, and no desired emission brightness may be obtained.

In a case where the phosphor of the present invention is a phosphor comprising an oxysulfide as the main phase, the pyrolysis synthesis is carried out by adjusting the heating temperature to from 600 to 1,300°C and the heating time within a range of from 0.5 second to 10 minutes, and the re-heat treatment is carried out by adjusting the heating temperature to be lower than the heating temperature of the pyrolysis synthesis by at least 100°C and to from 500 to 1,200°C, and the time within a range of from 10 minutes to 24 hours, whereby a phosphor having favorable emission properties can be obtained. If the pyrolysis product (oxysulfide powder) obtained under such conditions that the pyrolysis synthesis temperature is lower than 600°C or the reaction time is shorter than 0.5 second, is subjected to a re-heat treatment by adjusting the heating temperature to from 500 to 1,200°C and the reaction time within a range of from 10 minutes to 24 hours, although favorable crystallinity may be obtained, a large amount of aggregated particles are likely to form, whereby no dense fluorescent layer may be formed, and no desired emission properties may be obtained. If the pyrolysis synthesis temperature is higher than 1,300°C or the reaction time is longer than 10 minutes, an unnecessary energy tends to be wasted. On the other hand, if the heating temperature of the re-heat treatment is lower than 500°C or the heating time is shorter than 10 minutes, not only the crystallinity tends to be low, but also the activator ions may not uniformly activate the crystals, whereby no phosphor having favorable emission intensity may be obtained. Further, if the heating temperature of the re-heat treatment is higher than 1,200°C or the reaction time is longer than 24 hours, not only an unnecessary energy tends to be consumed, but also a large number of aggregated particles are likely to form, whereby no dense fluorescent layer may be formed, and no desired emission properties may be obtained.

In the present invention, the surface of the phosphor may be modified in order to improve dispersibility of the phosphor to be produced or coating properties of a phosphor slurry. In order to produce such a phosphor having its surface modified, the phosphor raw material solution is sprayed into a gas atmosphere to form fine droplets, followed by drying, a surface modifying substance is attached to the surface of said dried particles, and then the particles are introduced into the pyrolysis synthesis furnace together with the accompanying gas. Otherwise, after the above dried particles are treated in the pyrolysis synthesis furnace, a surface modifying substance is attached to the surface of the pyrolysis production particles.

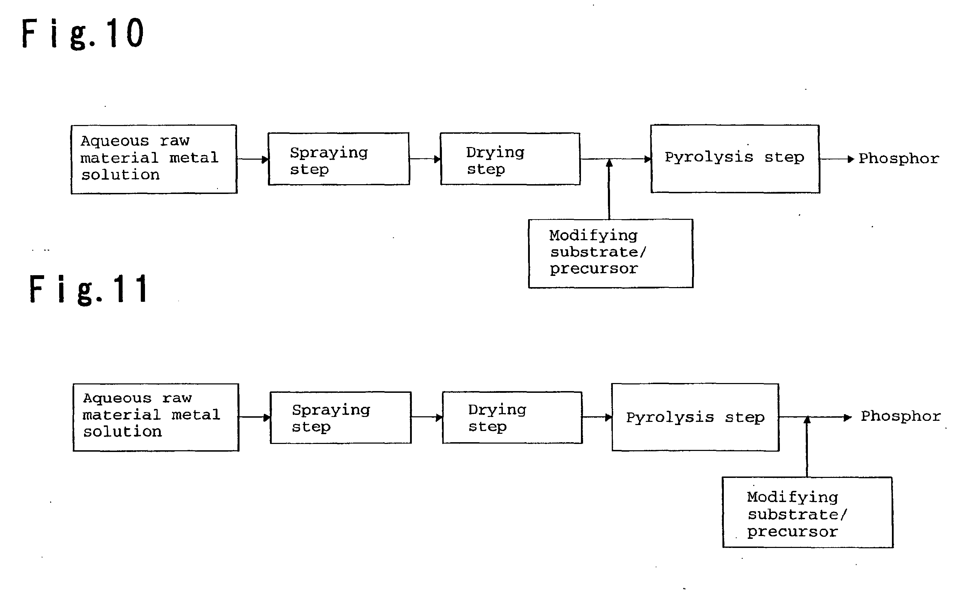

To form a surface modified layer on the phosphor particles, (1) a process of attaching a surface modifying substance to the surface of the above dried particles, then introducing the particles into the pyrolysis synthesis furnace to obtain a surface modified phosphor (Fig. 10), or (2) a process of introducing the above dried particles into the pyrolysis synthesis furnace together with the accompanying gas to form phosphor particles, then attaching a surface modifying substance to their surface to obtain a surface modified phosphor (Fig. 11).

The above surface modified layer to be attached to the surface of the phosphor is formed by attaching an aqueous solution having a surface modifying substance dissolved therein, a suspension having a surface modifying substance suspended therein, or a powder obtained by drying the above aqueous solution or suspension, to the surface of the above dried particles or phosphor particles. In such a case, it is preferred to electrify droplets formed by spraying the above aqueous solution or suspension or a powder thereof, electrify the above dried particles or phosphor particles, or electrify both to reversed polarity, so that the above droplets or powder is attached to the surface of the above dried particles or phosphor particles by static electricity.

The surface modifying substance to be used in the present invention may, for example, be an inorganic metal oxide such as silica, alumina, alumina sol, titania or zinc oxide, or a precursor of the above inorganic metal oxide which forms an inorganic metal oxide when heated to a high temperature, specifically, the above metal compound, zinc hydroxide, or pigment particles of e.g. ferric oxide red, cobalt aluminate or ultramarine. Such a surface modifying substance is effective to improve dispersibility of the phosphor or coating properties of a phosphor slurry.

According to the phosphor and the surface modified phosphor of the present invention, by optionally selecting metal salts dissolved in the phosphor raw material solution and their contents, a phosphor to be used for e.g. a cathode ray tube, a fluorescent lamp or a plasma display panel (PDP) can be produced, such as a rare earth oxide phosphor activated by a rare earth element such as Ln₂O₃:Eu³⁺, LnVO₄:Eu³⁺, Ln₂O₂S:Eu³⁺ or Ln₂O₂S:Tb (Ln is at least one rare earth element among Y, Gd and La), a rare earth vanadate phosphor, a rare earth oxysulfide phosphor, a zinc silicate phosphor activated by Mn (Zn₂SiO₄:Mn²⁺), an aluminate phosphor of an alkaline earth metal activated by Mn²⁺ or Eu²⁺ such as (Ba, Eu)MgAl₁₀O₁₇, a phosphate phosphor of a rare earth activated by Tb such as (La,Ce)PO₄:Tb, a ZnS type phosphor activated by e.g. Ag, Cu or Au, or a (Zn,Cd)S type phosphor.

Now, the present invention will be explained in further detail with reference to Examples.

### EXAMPLE 1

Each of yttrium nitrate and europium nitrate was dissolved in water and a small amount of nitric acid was added thereto so that the chemical composition of the phosphor would be (Y_{0.94}Eu_{0.06})₂O₃ to prepare a homogeneous aqueous metal salts solution having a solute concentration C of 0.3 as a raw material solution.

Using a nozzle having two smooth surfaces 1,1 which cross each other to form a cross sectional V shape (angle 60°) as illustrated in Fig. 3, having a plate-like outer appearance, an air pressurized to 1 MPa was ejected from a gas ejection port 2, and the raw material solution was supplied from a raw material solution supply port 3 to discharge droplets from the edge 4 of the nozzle.

The droplets were classified by an inertial classifier to adjust the particle size so that the weight average particle size of the droplets was 5 µm and 90 wt% of the droplets had a particle size of at most 10 µm. The droplets were dried by heating at 200°C in the air to obtain metal salt particles. The metal salt particles were kept at 200°C and transferred to a pyrolysis synthesis furnace, made to stay in an electric furnace having a maximum temperature of 1,600°C for 10 seconds and subjected to pyrolysis synthesis to obtain an oxide phosphor.

X-ray diffraction pattern was examined with regard to the obtained phosphor powder, whereupon formation of a single phase phosphor without an impurity phase was found. Further, the phosphor consisted of spheres having a smooth surface and a uniform particle size, and the average particle size was 1 µm. An emission spectrum was measured by irradiating the phosphor with ultraviolet rays having a wavelength of 254 nm, whereupon favorable red light emission was shown.

### EXAMPLE 2

Each of barium nitrate, europium nitrate, magnesium nitrate and aluminum nitrate was dissolved in water and a small amount of nitric acid was added thereto so that the chemical composition of the phosphor would be (Ba_{0.9}Eu_{0.1})O·MgO·5Al₂O₃ to prepare a homogeneous solution having a solute concentration C of 0.3 as a raw material solution.

Using the same nozzle as in Example 1, nitrogen containing 2 vol% of hydrogen, pressurized to 1 MPa, was ejected from a gas ejection port 2, the raw material solution was supplied from a solution supply port 3, and droplets were discharged from the edge 4 of the nozzle.

The droplets were classified by an inertial classifier to adjust the particle size of the droplets so that the weight average particle size of the droplets was 5 µm and 90 wt% of fine droplets had a particle size of at most 10 µm, and at the same time, the droplet volume per unit volume of the droplet-accompanying gas was concentrated five times.

The classified fine droplets were dried by heating at 200°C to obtain metal salt particles. The metal salt particles were kept at 200°C and transferred to a pyrolysis synthesis furnace, and subjected to pyrolysis synthesis in the pyrolysis synthesis furnace having a maximum temperature of 1,600°C for 10 seconds to obtain an oxide phosphor.

X-ray diffraction pattern was examined with regard to the obtained phosphor powder, whereupon formation of a single phase phosphor without an impurity phase was found. Further, the phosphor consisted of spheres having a smooth surface and a uniform particle size, and the average particle size was 1 µm. An emission spectrum was measured by irradiating the phosphor with ultraviolet rays having a wavelength of 254 nm, whereupon favorable blue light emission was shown.

### EXAMPLE 3

A sulfide phosphor comprising ZnS as the main phase was produced. An aqueous silver nitrate solution and an aqueous sodium chloride solution, and further, an aqueous thiourea solution were added to an aqueous zinc nitrate solution so that the concentration of silver and chlorine contained in the sulfide phosphor would be 0.01 wt% to prepare a homogeneous solution having a solute concentration C of 0.3 as a raw material solution.

Using the same nozzle as in Example 1, nitrogen pressurized to 1 MPa was ejected from the gas ejection port 2, the raw material solution was supplied from the raw material solution supply port 3, and droplets were discharged from the nozzle edge.

The droplets were classified by an inertial classifier to adjust the particle size of the droplets so that the weight average particle size of the droplets was 5 µm and 90 wt% of fine droplets had a particle size of at most 10 µm.

The classified fine droplets were dried by heating at 200°C to obtain metal complex particles. Then, a slight amount of hydrogen sulfide was added to the accompanying gas and mixed, the particles were transferred to a pyrolysis synthesis furnace while keeping the temperature at 200°C, introduced in the pyrolysis synthesis furnace having a maximum temperature of 1,000°C and subjected to pyrolysis synthesis for 10 seconds to obtain an oxide phosphor.

X-ray diffraction pattern was examined with regard to the obtained phosphor powder, whereupon formation of a ZnS single phase phosphor without an impurity phase was found. Further, the phosphor consisted of spheres having a smooth surface and a uniform particle size, and the average particle size was 1 µm. This phosphor was irradiated with electron rays having an accelerating voltage of 25 kV and an emission spectrum was measured, whereupon favorable blue light emission was shown.

### EXAMPLE 4

Each of yttrium nitrate and europium nitrate was dissolved in water, and an aqueous thiourea solution and a slight amount of potassium phosphate were added thereto so that the chemical composition of the phosphor would be (Y_{0.96}Eu_{0.04})₂O₂S to prepare a homogeneous solution having a solute concentration C of 0.3 as a raw material solution.

Using the same nozzle as in Example 1, nitrogen pressurized to 1 MPa was ejected from the ejection port 2, the raw material solution was supplied from the raw material solution supply port 3 to discharge droplets from the edge 4 of the nozzle.

The droplets were classified by an inertial classifier to adjust the particle size so that the weight average particle size of the droplets was 5 µm and 90 wt% of fine droplets had a particle size of at most 10 µm, and at the same time, the droplet volume per unit volume of the droplet-accompanying gas was concentrated five times.

The classified fine droplets were dried by heating at 200°C to obtain metal salt particles. Then, a slight amount of hydrogen sulfide was added and mixed with the accompanying gas, and the metal salt particles were transferred to a pyrolysis synthesis furnace while keeping their temperature at 200°C, and introduced into the pyrolysis synthesis furnace having a maximum temperature of 1,150°C and subjected to pyrolysis synthesis for 10 seconds to obtain an oxysulfide phosphor.

X-ray diffraction pattern was examined with regard to the obtained phosphor powder, whereupon formation of a single phase phosphor without an impurity phase was found. Further, the phosphor consisted of spheres having a smooth surface and a uniform particle size, and the average particle size was 1 µm. This phosphor was irradiated with electron rays having an accelerating voltage of 25 kV and an emission spectrum was measured, whereupon favorable red light emission was shown.

### EXAMPLE 5

Using ten nozzles having the edge part of a solution flow path divided into 100 parts, provided with a thermal head as illustrated in Fig. 9 at each of the very edge parts of the respective edge parts, droplets of the raw material solution prepared in Example 1 were discharged from each nozzle into the air. An air accompanying the droplets was introduced into an inertial classifier and concentrated double, and the particle size was adjusted so that the weight average particle size of the droplets was 19 µm and 90 wt% of the droplets had a particle size of at most 25 µm. The droplets were introduced into a drying zone together with the accompanying air and dried by heating at 200°C to obtain metal salt particles. The metal salt particles were transferred into a pyrolysis synthesis furnace while keeping their temperature at 200°C and made to stay in the pyrolysis synthesis furnace having a maximum temperature of 1,600°C for 10 seconds and subjected to pyrolysis synthesis to obtain a phosphor.

Chemical analysis was carried out and X-ray diffraction pattern was examined with regard to the obtained phosphor, whereupon formation of a single phase phosphor without an impurity phase, having a chemical composition of (Y_{0.94}Eu_{0.06})₂O₃, was found. Further, the surface of the phosphor was observed by an SEM photograph, whereupon the phosphor consisted of smooth approximate spheres having a uniform particle size, and the average particle size was 4 µm. This phosphor was irradiated with ultraviolet rays having a wavelength of 254 nm and an emission spectrum was measured, whereupon favorable red light emission was shown.

### EXAMPLE 6

Using ten nozzles having the edge part of a solution flow path divided into 100 parts, provided with a thermal head as illustrated in Fig. 8 at each of the very edge parts of the respective edge parts, droplets of the raw material solution prepared in Example 2 were discharged from each nozzle into a nitrogen gas containing 2 vol% of hydrogen. The droplets were introduced into an inertial classifier together with an accompanying gas and concentrated three times, and the particle size was adjusted so that the weight average particle size of the droplets was 19 µm and 90 wt% of the droplets had a particle size of at most 25 µm. The droplets was introduced into a drying zone together with the accompanying gas and dried by heating at 200°C to obtain metal salt particles. The metal salt particles were transferred into a pyrolysis synthesis furnace while keeping their temperature at 200°C and made to stay in the pyrolysis synthesis furnace having a maximum temperature of 1,600°C for 10 seconds and subjected to pyrolysis synthesis to obtain a phosphor.

Chemical analysis was carried out and X-ray diffraction pattern was examined with regard to the obtained phosphor, whereupon formation of a single phase phosphor without an impurity phase, having a chemical composition of (Ba_{0.9}Eu_{0.1})O·MgO·5Al₂O₃, was found. Further, the surface of the phosphor was observed by an SEM photograph, whereupon the phosphor consisted of smooth approximate spheres having a uniform particle size, and the average particle size was 3.8 µm. This phosphor was irradiated with ultraviolet rays having a wavelength of 254 nm and an emission spectrum was measured, whereupon favorable blue light emission was shown.

### EXAMPLE 7

A sulfide phosphor comprising ZnS as the main phase was produced. Using the same nozzles as in Example 6, droplets of the raw material solution of Example 3 were discharged into a nitrogen gas containing 2 vol% of hydrogen from each nozzle. The droplets were introduced into an inertial classifier together with an accompanying gas and concentrated three times, and the particle size was adjusted so that the weight average particle size of the droplets was 19 µm and 90 wt% of the droplets had a particle size of at most 25 µm. The droplets were introduced into a drying zone together with the accompanying gas and dried by heating at 200°C to obtain metal salt particles. A slight amount of hydrogen sulfide was added and mixed with the gas accompanying the metal salt particles, and the metal salt particles were transferred to a pyrolysis synthesis furnace while keeping their temperature at 200°C, and made to stay in the pyrolysis synthesis furnace having a maximum temperature of 1,000°C for 10 seconds and subjected to pyrolysis synthesis to obtain a phosphor.

X-ray diffraction pattern was examined with regard to the obtained phosphor, whereupon formation of a ZnS single phase phosphate without an impurity phase was found. Further, the surface of the phosphor was observed by an SEM photograph, whereupon the phosphor consisted of smooth approximate spheres having a uniform particle size, and the average particle size was 3.8 µm. This phosphor was irradiated with electron rays having an accelerating voltage of 25 kV and an emission spectrum was measured, whereupon favorable blue light emission was shown.

### EXAMPLE 8

Using the same nozzles as in Example 6, droplets of the raw material solution of Example 4 were discharged into a nitrogen gas from each nozzle. The droplets were introduced into an inertial classifier together with an accompanying gas and concentrated three times, and the particle size was adjusted so that the weight average particle size of the droplets was 19 µm and 90 wt% of the droplets had a particle size of at most 25 µm. The droplets were introduced into a drying zone together with the accompanying gas and dried by heating at 200°C to obtain metal salt particles. A slight amount of hydrogen sulfide was added and mixed with the gas accompanying the metal salt particles, and the metal salt particles were transferred into a pyrolysis synthesis furnace while keeping their temperature at 200°C and made to stay in the pyrolysis synthesis furnace having a maximum temperature of 1,150°C for 10 seconds and subjected to pyrolysis synthesis to obtain a phosphor.

Chemical analysis was carried out and X-ray diffraction pattern was examined with regard to the obtained phosphor, whereupon formation of a single phase phosphor without an impurity phase, having a chemical composition of (Y_{0.96}Eu_{0.04})₂O₂S, was found. Further, the surface of the phosphor was observed by an SEM photograph, whereupon the phosphor consisted of smooth approximate spheres having a uniform particle size, and the average particle size was 3.8 µm. This phosphor was irradiated with electron rays having an accelerating voltage of 25 kV and an emission spectrum was measured, whereupon favorable red light emission was shown.

### EXAMPLE 9

Using nitrogen containing 2 vol% of hydrogen as an accompanying gas, the raw material solution of Example 2 was formed into fine droplets and discharged into the above accompanying gas by means of an ultrasonic atomizer provided with an oscillator which oscillates at 1.7 MHz in frequency and oscillates the liquid surface in a liquid flow path. The droplets were classified by using an inertial classifier to adjust the particle size so that the weight average particle size of the droplets was 5 µm and 90 wt% of the droplets had a particle size of at most 10 µm, and the droplet volume per unit volume of the accompanying gas was concentrated five times.

The classified droplets were heated at 200°C to obtain metal salt particles. The metal salt particles were transferred to another inertial classifier while keeping their temperature at 200°C, and 90 vol% of the accompanying gas was removed to concentrate the droplet volume per unit volume of the accompanying gas ten times. The gas removed from the accompanying gas was cooled to room temperature and water content was removed therefrom, and the gas was added to the above gas containing metal salt particles to decrease the water vapor concentration one tenth. This operation was repeated twice, to decrease the water vapor concentration to 0.05 vol%.

The gas containing metal salt particles having the water vapor concentration adjusted, was transferred to a pyrolysis synthesis furnace while keeping its temperature at 200°C, and subjected to pyrolysis synthesis in the pyrolysis synthesis furnace having a maximum temperature of 1,600°C for 10 seconds to obtain oxide phosphor particles. X-ray diffraction pattern was examined with regard to the obtained phosphor particles, whereupon formation of a single phase phosphor without an impurity phase, having a composition of (Ba_{0.9}Eu_{0.1})O·MgO·5Al₂O₃ was found. Further, the phosphor consisted of spheres having a smooth surface and a uniform particle size, and the average particle size was 1 µm. This phosphor was irradiated with ultraviolet rays having a wavelength of 254 nm and an emission spectrum was measured, whereupon favorable blue light emission was shown.

### EXAMPLE 10

A gas containing metal salt particles having the water vapor concentration adjusted was prepared in the same manner as in Example 9 by using the raw material solution of Example 3 as a phosphor raw material solution instead of the raw material solution of Example 2, and the gas was transferred to a pyrolysis synthesis furnace while keeping its temperature at 200°C, and subjected to pyrolysis synthesis in the pyrolysis synthesis furnace having a maximum temperature of 1,000°C for 10 seconds to obtain sulfide phosphor particles.

X-ray diffraction pattern was examined with regard to the obtained phosphor particles, whereupon formation of a ZnS single phase phosphor without an impurity phase was found. Further, the phosphor had a smooth surface and consisted of spherical particles having a uniform particle size, and the average particle size was 1 µm. This phosphor was irradiated with electron rays having an accelerating voltage of 25 kV and an emission spectrum was measured, whereupon favorable blue light emission was shown.

### EXAMPLE 11

Each of yttrium nitrate and europium nitrate was dissolved in water, and aqueous thiourea solution and a slight amount of an aqueous potassium phosphate solution were added thereto so that the chemical composition of the phosphor would be (Y_{0.94}Eu_{0.06})₂O₃ to prepare a homogeneous solution having a solute concentration C of 0.3 as a raw material solution.

Using nitrogen as an accompanying gas, the raw material solution was formed into fine droplets and discharged into the above accompanying gas by means of an ultrasonic atomizer provided with an oscillator which oscillates at 1.7 MHz in frequency and oscillates the liquid surface in a liquid flow path. The droplets were classified by using an inertial classifier to adjust the particle size so that the weight average particle size of the droplets was 5 µm and 90 wt% of the droplets had a particle size of at most 10 µm, and at the same time, the droplet volume per unit volume of the accompanying gas was concentrated five times.

The classified droplets were heated at 200°C to obtain metal salt particles. The metal complex particles were transferred to another inertial classifier while keeping their temperature at 200°C, and 90 vol% of the accompanying gas was removed to concentrate the droplet volume per unit volume of the accompanying gas ten times. The gas removed from the accompanying gas was cooled to room temperature and water content was removed therefrom, and the gas was added to the above gas containing metal complex particles to decrease the water vapor concentration one tenth. This operation was repeated twice, to decrease the water vapor concentration to 0.05 vol%.

A nitrogen gas containing a hydrogen sulfide gas was added and mixed with the air accompanying the metal complex particles, having the water vapor concentration adjusted, to adjust the hydrogen sulfide concentration in the gas to 5 vol%, and then the gas was transferred to a pyrolysis synthesis furnace while keeping its temperature at 200°C, and subjected to pyrolysis synthesis in the pyrolysis synthesis furnace having a maximum temperature of 1,150°C for 10 seconds to obtain oxysulfide phosphor particles. X-ray diffraction pattern of the obtained phosphor particles were examined, whereupon formation of a single phase phosphor without an impurity phase, having a composition of (Y_{0.94}Eu_{0.06})₂O₃, was found. Further, the phosphor consisted of spheres having a smooth surface and a uniform particle size, and the average particle size was 1 µm. This phosphor was irradiated with electron rays having an accelerating voltage of 25 kV and an emission spectrum was measured, whereupon favorable red light emission was shown.

### EXAMPLE 12

Using air as an accompanying gas, the raw material solution of Example 1 was formed into fine droplets and discharged into the accompanying gas by means of an ultrasonic atomizer provided with an oscillator which oscillates at 1.7 MHz in frequency and oscillates the liquid surface in a liquid flow path.

The droplets were classified by an inertial classifier to adjust the particle size so that the weight average particle size of the droplets was 5 µm and 90 wt% of the droplets had a particle size of at most 10 µm, and at the same time, the droplet volume per unit volume of the accompanying gas was concentrated five times. The droplets were heated at 200°C to obtain dried particles. The dried particles were transferred to a pyrolysis synthesis furnace while keeping their temperature at 200°C, made to stay in the pyrolysis synthesis furnace having a maximum temperature of 1,600°C for 10 seconds and subjected to pyrolysis synthesis to obtain oxide particles. The oxide particles were filled in a baking container and subjected to a re-heat treatment in the air at 1,400°C for 2 hours to obtain a phosphor having the emission properties adjusted.

X-ray diffraction pattern was examined with regard to the obtained phosphor particles, whereupon formation of a single phase phosphor without an impurity phase, having a chemical composition of (Y_{0.94}Eu_{0.06})₂O₃, was found. Further, the phosphor consisted of spheres having a smooth surface and a uniform particle size, and the average particle size was 1 µm. This phosphor was irradiated with ultraviolet rays having a wavelength of 254 nm and an emission spectrum was measured, whereupon favorable red light emission was shown.

### EXAMPLE 13

Using nitrogen containing 2 vol% of hydrogen as an accompanying gas, the raw material solution of Example 2 was formed into fine droplets and discharged into the accompanying gas by means of an oscillator which oscillates at 1.7 MHz in frequency and oscillates the liquid surface in a liquid flow path.

The droplets were classified by an inertial classifier to adjust the particle size of the droplets so that the weight average particle size of the droplets was 5 µm and 90 wt% of fine droplets had a particle size of at most 10 µm, and at the same time, the droplet volume per unit volume of the droplet-accompanying gas was concentrated five times. The classified fine droplets were heated at 200°C to obtain dried particles. The dried particles were transferred to a pyrolysis synthesis furnace while keeping their temperature at 200°C, subjected to pyrolysis synthesis in the pyrolysis synthesis furnace having a maximum temperature of 1,600°C for 10 seconds to provide oxide particles, which were collected by a bag filter. The oxide particles were packed in a baking container, and a re-heat treatment was carried out in an atmosphere of nitrogen containing 2 vol% of hydrogen at 1,400°C for 2 hours to obtain a phosphor having the emission properties adjusted.

X-ray diffraction pattern was examined with regard to the obtained phosphor, whereupon formation of a single phase phosphor without an impurity phase, having a chemical composition of (Ba_{0.9}Eu_{0.1})O·MgO·5Al₂O₃, was found. Further, the phosphor consisted of spheres having a smooth surface and a uniform particle size, and the average particle size was 1 µm. This phosphor was irradiated with ultraviolet rays having a wavelength of 254 nm and an emission spectrum was measured, whereupon favorable blue light emission was shown.

### EXAMPLE 14

Using nitrogen as an accompanying gas, the raw material solution of Example 3 was formed into fine droplets and discharged into the accompanying gas by means of an oscillator which oscillates at 1.7 MHz in frequency and oscillates the liquid surface in a liquid flow path.

The droplets were classified by an inertial classifier to adjust the particle size of the droplets so that the weight average particle size of the droplets was 5 µm and 90 wt% of fine droplets had a particle size of at most 10 µm, and at the same time, the droplet volume per unit volume of the droplet-accompanying gas was concentrated five times. The classified fine droplets were heated at 200°C to obtain dried particles. The dried particles were transferred to a pyrolysis synthesis furnace while keeping their temperature at 200°C, a slight amount of hydrogen sulfide was added and mixed with the accompanying gas, and the particles were subjected to pyrolysis synthesis in the pyrolysis synthesis furnace having a maximum temperature of 1,000°C for 10 seconds to produce sulfide particles, which were collected by a bag filter. The sulfide particles were filled in a baking container, and a re-heat treatment was carried out in an atmosphere of nitrogen containing a small amount of carbon disulfide at 800°C for 2 hours to obtain a phosphor having the emission properties adjusted.

X-ray diffraction pattern was examined with regard to the obtained phosphor, whereupon formation of a ZnS single phase phosphor without an impurity phase was found. Further, the phosphor consisted of spheres having a smooth surface and a uniform particle size, and the average particle size was 1 µm. This phosphor was irradiated with electron rays having an accelerating voltage of 25 kV and an emission spectrum was measured, whereupon favorable blue light emission was shown.

### EXAMPLE 15

Using nitrogen as an accompanying gas, the raw material solution of Example 4 was formed into fine droplets and discharged into the accompanying gas by means of an oscillator which oscillates at 1.7 MHz in frequency and oscillates the liquid surface in a liquid flow path.

The droplets were classified by an inertial classifier to adjust the particle size so that the weight average particle size of the droplets was 5 µm and 90 wt% of the droplets had a particle size of at most 10 µm, and at the same time, the droplet volume per unit volume of the accompanying gas was concentrated five times. The droplets were heated at 200°C to obtain dried particles. The dried particles were transferred to a pyrolysis synthesis furnace while keeping their temperature at 200°C, a slight amount of hydrogen sulfide was added and mixed with the accompanying gas, and then the particles were made to stay in the pyrolysis synthesis furnace having a maximum temperature of 1,200°C for 10 seconds and subjected to pyrolysis synthesis to obtain oxysulfide particles, which were collected by a bag filter. The oxysulfide particles were packed in a baking container, and a re-heat treatment was carried out in an atmosphere of nitrogen containing a small amount of carbon disulfide at 1,000°C for 2 hours to obtain a phosphor having the emission properties adjusted.

X-ray diffraction pattern was examined with regard to the obtained phosphor particles, whereupon formation of a single phase phosphor without an impurity phase, having a chemical composition of (Y_{0.96}Eu_{0.04})₂O₂S, was found. Further, the phosphor consisted of spheres having a smooth surface and a uniform particle size, and the average particle size was 1 µm. This phosphor was irradiated with electron rays having an accelerating voltage of 25 kV and an emission spectrum was measured, whereupon favorable red light emission was shown.

### EXAMPLE 16

Yttrium nitrate and europium nitrate were dissolved in water and a small amount of nitric acid was added thereto so that the chemical composition of the phosphor would be (Y_{0.97}Eu_{0.03})₂O₃ to prepare an aqueous metal salts solution having a solute concentration C (total number of mols of the metal elements/1 kg of aqueous solution) of 0.3.

The aqueous metal salts solution was sucked up by means of an air pressurized to 1 MPa and sprayed into fine droplets. The fine droplets were classified by using an inertial classifier to adjust the particle size of the droplets so that the weight average particle size of the droplets was 5 µm and 90 wt% of fine droplets had a particle size of at most 10 µm. The classified droplets were dried by heating at 200°C to obtain metal salt particles.

The obtained metal salt particles were transferred to a pyrolysis synthesis furnace by means of an air flow while keeping their temperature at 200°C, and subjected to pyrolysis synthesis in an electric furnace having a maximum temperature of 1,600°C for 10 seconds to obtain a phosphor. The phosphor was once collected, said phosphor was negatively charged and suspended in the air flow, and on the other hand, red iron oxide having an average particle size of 0.2 µm was suspended in water to prepare an aqueous slurry of 0.5 wt%, the slurry was sprayed on the surface of the above phosphor particles suspended in the air flow so that the red iron oxide-containing droplets which were positively charged and the above phosphor particles which were negatively charged were electrostatically attracted to each other and the phosphor particles having the red iron oxide attached thereto were introduced into a heating furnace and subjected to a heat treatment at 1,000°C for 10 seconds.

The obtained phosphor consisted of approximately spherical particles having a smooth surface and a uniform particle size, and the average particle size was 1 µm. The degree of peeling of the red iron oxide from the phosphor particles was small as compared with attachment by a conventional wet method. Here, the degree of separation of the red iron oxide was examined in such a manner that the phosphor was put into a test tube, and a predetermined amount of water was further added thereto to prepare a phosphor slurry, the test tube was shaken for a predetermined time and then left to stand for a predetermined time, and the light transmittance of a supernatant liquid in the test tube was measured to examine the relative degree of peeling of the red iron oxide. With regard to the phosphor, an emission spectrum under irradiation with ultraviolet rays having a wavelength of 254 nm was measured, whereupon favorable red light emission was shown.

### EXAMPLE 17

Each of barium nitrate, europium nitrate, magnesium nitrate and aluminum nitrate was dissolved in water and a small amount of nitric acid was added thereto so that the chemical composition of the phosphor would be (Ba_{0.9}Eu_{0.1})O·MgO·5Al₂O₃ to prepare a homogeneous aqueous metal salts solution having a solute concentration C of 0.3.

Using nitrogen containing 2 vol% of hydrogen as an accompanying gas, the aqueous metal salts solution was put in an ultrasonic atomizer having an oscillator which oscillates at 1.7 MHz in frequency and oscillates the liquid surface to form fine droplets. Then, the droplets were classified by using an inertial classifier to adjust the particle size of the droplets so that the weight average particle size of the droplets would be 5 µm and 90 wt% of fine droplets had a particle size of at most 10 µm, and at the same time, the droplet volume per unit volume of the droplet-accompanying gas was concentrated five times.

The classified droplets were dried by heating at 200°C to obtain metal salt particles. The metal salt particles were transferred to a pyrolysis synthesis furnace while keeping their temperature at 200°C, and subjected to pyrolysis synthesis in an electric furnace having a maximum temperature of 1,600°C for 10 seconds to obtain oxide particles.

Then, aluminum nitrate was dissolved in water, and a small amount of nitric acid was added thereto to prepare an aqueous metal salts solution having a solute concentration C of 0.3. This aqueous aluminum nitrate solution was sprayed on the above produced oxide particles so that it became 2 wt% based on the oxide particles. At that time, the oxide particles were negatively charged, the droplets of aluminum nitrate were positively charged, aluminum nitrate was attached to the surface of the oxide particles, and the particles were introduced into a heating furnace together with a flow of a nitrogen gas containing 2 vol% of hydrogen and heated at 1,000°C for 10 seconds to cover the surface of the oxide particles with aluminum oxide to obtain a phosphor of (Ba_{0.9}Eu_{0.1})O·MgO·5Al₂O₃.

The obtained phosphor consisted of approximately spherical particles having a smooth surface and a uniform particle size, and the average particle size was 1 µm. The surface of the phosphor was covered with a coating film of aluminum oxide. With regard to the phosphor, an emission spectrum under irradiation with ultraviolet rays having a wavelength of 254 nm was measured, whereupon favorable blue light emission was shown.

### INDUSTRIAL APPLICABILITY

According to the present invention, a phosphor having a narrow particle size distribution, having a small number of aggregated particles, having a spherical shape, having a high purity and uniform chemical composition, and having excellent emission properties, can easily be produced.

Further, a phosphor comprising phosphor particles having a spherical or approximately spherical shape, being less likely to aggregate, and a dense surface modifying layer having favorable adhesive properties and being less likely to peel off, formed on the surface of the particles, can efficiently be obtained at a low cost, and formation of a homogeneous and dense high brightness fluorescent layer suitable for e.g. a cathode ray tube, a fluorescent lamp or PDP, becomes possible.

## Claims

1. A process for producing a phosphor, which comprises spraying a phosphor raw material solution containing metal elements constituting the phosphor into a gas atmosphere to form fine droplets, drying them to form solid particles, and introducing the above solid particles into a pyrolysis synthesis furnace together with the above gas accompanying the particles, followed by heating for pyrolysis synthesis.

2. The process for producing a phosphor according to Claim 1, wherein the above phosphor raw material solution is an aqueous solution having metal salts of the metal elements constituting the phosphor dissolved therein, and at least 10 wt% of said metal salts are nitrates or acetates.

3. The process for producing a phosphor according to Claim 1 or 2, wherein a fluxes is contained in the above phosphor raw material solution.

4. The process for producing a phosphor according to any one of Claims 1 to 3, wherein the above droplets are classified to adjust the particle size so that the weight average particle size of the above droplets is within a range of from 0.5 to 20 µm, and 90 wt% of the droplets have a particle size of at most double the weight average particle size, and then the pyrolysis synthesis is carried out.

5. The process for producing a phosphor according to any one of Claims 1 to 4, wherein the volume concentration of the above droplets in the gas is concentrated at least double, simultaneously with the above classification.

6. The process for producing a phosphor according to any one of Claims 1 to 5, wherein as the above gas, an oxidizing gas, a reducing gas or an inert gas is used.

7. The process for producing a phosphor according to any one of Claims 1 to 6, wherein the above pyrolysis synthesis is carried out by adjusting the heating temperature to from 500 to 1900°C and the heating time to from 0.5 second to 10 minutes.

8. The process for producing a phosphor according to Claim 7, wherein the above phosphor is a phosphor comprising an oxide as the main phase, and the above pyrolysis synthesis is carried out in an oxidizing gas atmosphere by adjusting the heating temperature to from 900 to 1900°C.

9. The process for producing a phosphor according to Claim 7, wherein the above phosphor is a phosphor comprising a sulfide as the main phase, and the above pyrolysis synthesis is carried out in a sulfurizing gas atmosphere by adjusting the heating temperature to from 500 to 1100°C.

10. The process for producing a phosphor according to Claim 7, wherein the above phosphor is a phosphor comprising an oxysulfide as the main phase, and the above pyrolysis synthesis is carried out in a sulfurizing gas atmosphere by adjusting the heating temperature to from 700 to 1300°C.

11. The process for producing a phosphor according to any one of Claims 1 to 10, wherein a nozzle having an ejection port for a high pressure gas at the back part of a smooth surface, having a supply port for the above phosphor raw material solution at the intermediate part of the above smooth surface, and discharging fine droplets from the edge of the above smooth surface, is used, the above high pressure gas ejected from the above ejection port along the above smooth surface forms a high speed gas flow without departing from the above smooth surface, the above phosphor raw material solution is supplied from the above supply port so that it crosses said high speed gas flow, the above high speed gas flow presses said phosphor raw material solution on the above smooth surface to form a thin film flow, and said thin film flow is discharged from the edge of the above smooth surface by the above high speed gas flow to form the above fine droplets.

12. The process for producing a phosphor according to any one of Claims 1 to 10, wherein a nozzle having two smooth surfaces which cross each other to form a cross sectional V shape at the edges, having ejection ports for high pressure gases at the back part of the respective smooth surfaces, having a supply port for the above phosphor raw material solution at the intermediate part of at least one of the above smooth surfaces, and discharging fine droplets from the edge part of the above smooth surfaces, is used, the above high pressure gases ejected from the above respective ejection ports along the above two smooth surfaces form two high speed gas flows without departing from the above smooth surfaces, the above phosphor raw material solution is supplied from the above supply port so that it crosses at least one of said high speed gas flows, said phosphor raw material solution is pressed on the above smooth surface by the above high speed gas flow to form a thin film flow, and the above thin film flow is discharged by the above two high speed gas flows which collide with each other at the edge in the above cross sectional V shape to form the above fine droplets.

13. The process for producing a phosphor according to any one of Claims 1 to 10, wherein a nozzle having plural solution flow paths, provided with piezoelectric element heads at the edge parts of the respective solution flow paths, is used, and the above phosphor raw material solution is discharged from the above nozzle to the gas atmosphere to form the above fine droplets.

14. The process for producing a phosphor according to any one of Claims 1 to 10, wherein a nozzle having plural solution flow paths, provided with thermal heads at the edge parts of the respective solution flow paths, is used, and the above phosphor raw material solution is discharged as fine droplets from the above nozzle to the gas atmosphere to form the above fine droplets.

15. The process for producing a phosphor according to any one of Claims 1 to 14, wherein the water vapor concentration of the above gas accompanying the above solid particles is reduced to at most 1 vol%, and then the above pyrolysis synthesis is carried out.

16. The process for producing a phosphor according to any one of Claims 1 to 15, wherein after the above classification is carried out, a gas having a water vapor concentration lower than that of the above accompanying gas is added.

17. The process for producing a phosphor according to any one of Claims 1 to 16, wherein the above pyrolysis synthesis in the above pyrolysis synthesis furnace is carried out at a heating temperature of from 600 to 1900°C for a heating time of from 0.5 second to 10 minutes, and the obtained pyrolysis product is collected, packed in a baking container for re-heating and subjected to a re-heat treatment at a temperature lower than the heating temperature of the above pyrolysis synthesis by at least 100°C and at a temperature of from 500 to 1800°C for a heating timer of from 10 minutes to 24 hours.

18. The process for producing a phosphor according to Claim 17, wherein as the atmosphere gas at the time of the above re-heat treatment, an oxidizing gas, a reducing gas or an inert gas is used.

19. The process for producing a phosphor according to any one of Claims 1 to 18, wherein the above phosphor raw material solution is sprayed into a gas atmosphere to form fine droplets, they are dried to form solid particles, a surface modifying substance is attached to the surface of said solid particles, and then the solid particles are introduced into a pyrolysis synthesis furnace together with the above accompanying gas for pyrolysis.

20. The process for producing a phosphor according to any one of Claims 1 to 18, wherein the above phosphor raw material solution is sprayed into a gas atmosphere to form fine droplets, they are dried to form solid particles, which are introduced into a pyrolysis synthesis furnace together with the above accompanying gas for pyrolysis, and then a surface modifying substance is attached to the surface of said pyrolysis product particles.

21. The process for producing a phosphor according to Claim 20, wherein after the surface modifying substance is attached to the surface of the above pyrolysis product particles, a heat treatment is further carried out for from 0.5 second to 10 minutes.

22. The process for producing a phosphor according to any one of Claims 19 to 21, wherein static electricity is imparted to droplets or a powder of the above surface modifying substance, and/or the above dried particles or the above pyrolysis product particles, and the above droplets are attached to the surface of the above particle by the static electricity.
